(19) Europäisches Patentamt

European Patent Office

Office européen des brevets

(11) **EP 4 535 050 A1**

(12) # EUROPEAN PATENT APPLICATION
published in accordance with Art. 153(4) EPC

(43) Date of publication:
**09.04.2025 Bulletin 2025/15**

(21) Application number: **22946550.5**

(22) Date of filing: **26.10.2022**

(51) International Patent Classification (IPC):
**G02B 6/02** (2006.01)    **G02B 6/036** (2006.01)
**G02B 6/028** (2006.01)

(86) International application number:
**PCT/CN2022/127618**

(87) International publication number:
**WO 2023/240880 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2022  CN 202210679791**

(71) Applicants:
• **FIBERHOME TELECOMMUNICATION
TECHNOLOGIES CO., LTD.**
**Hubei 430000 (CN)**
• **Fiberhome Fujikura Optic Technology Co., Ltd**
**Wuhan, Hubei 430000 (CN)**
• **Fiberhome Marine Network Equipment Co., Ltd**
**Zhuhai, Guangdong 519050 (CN)**

(72) Inventors:
• **LUO, Wenyong**
**Wuhan, Hubei 430000 (CN)**

• **MAO, Qian**
**Wuhan, Hubei 430000 (CN)**
• **XIANG, Haipeng**
**Wuhan, Hubei 430000 (CN)**
• **GENG, Hao**
**Wuhan, Hubei 430000 (CN)**
• **QIAN, Feng**
**Wuhan, Hubei 430000 (CN)**
• **CHEN, Baoping**
**Wuhan, Hubei 430000 (CN)**
• **HUANG, Zhiling**
**Wuhan, Hubei 430000 (CN)**
• **HUANG, Fei**
**Wuhan, Hubei 430000 (CN)**
• **HU, Guyue**
**Wuhan, Hubei 430000 (CN)**
• **QI, Qingqing**
**Wuhan, Hubei 430000 (CN)**

(74) Representative: **Lohmanns Lohmanns & Partner
mbB**
**Benrather Schlossallee 49-53**
**40597 Düsseldorf (DE)**

(54) **MULTIBAND ATTENUATION FLATTENED FIBER**

(57)    A multiband attenuation flattened fiber, comprising a central gradient core layer (1), a flattened core layer (2), a transition core layer (3), a flattened suppression cladding layer (4), and a quartz cladding layer (5) which are sequentially arranged from inside to outside in a radial direction. The refractive index of the central gradient core layer (1) is less than the refractive index of the flattened core layer (2), the refractive index of the flattened core layer (2) is greater than the refractive index of the transition core layer (3), and the refractive index of the transition core layer (3) is greater than the refractive index of the flattened suppression cladding layer (4); from inside to outside in the radial direction, a relative refractive index difference of the central gradient core layer (1) is increased in a first polynomial line shape, and a relative refractive index difference of the transition core layer (3) is decreased in a second polynomial line shape; the central gradient core layer (1), the flattened core layer (2) and the flattened suppression cladding layer (4) are doped with germanium, or the central gradient core layer (1) and the flattened suppression cladding layer (4) are doped with fluorine, thereby solving the problem of large multiband attenuation flatness in the related art.

EP 4 535 050 A1

Fig. 2

## Description

### Field of the Invention

The present application relates to the technical field of optical fiber manufacturing, and in particular to a multiband attenuation flattened optical fiber.

### Background of the Invention

With the development of 5G, big data, artificial intelligence, and the Internet of Things, data transmission capacity has increased rapidly, the growth rate of global network capacity is exceeding that of optical communication network transmission capacity, and an optical communication network transmission capacity crisis is gradually emerging. Therefore, it is urgent to increase the transmission capacity of the existing optical fiber communication network. However, the communication capacity of traditional single-mode optical fiber has approached the physical limit of Shannon's theorem, and how to fully improve the utilization rate of a single optical fiber has become the focus of research. Research on new technologies such as space-division multiplexing transmission optical fibers and photon orbital angular momentum transmission optical fibers has become a hot topic. However, these technologies have poor compatibility with existing conventional communication optical fiber technologies. While expanding the trunk transmission capacity, the integration of these technologies with access networks and other systems also presents a challenge. Therefore, expanding the band range of existing optical fiber communication systems (currently covering only the C band with 35 nm) and addressing the related scientific and technical issues have become key to supporting the development of the next generation of optical fiber communication. If the communication band can be expanded from the existing C band to the L band and even the U band, and further towards shorter wavelengths into the S band, the transmission capacity of optical communication will be able to be increased several times or even by more than an order of magnitude using the existing optical fiber communication network.

However, existing single-mode optical fibers experience large attenuation changes from the S band to the U band. The difference between the maximum and minimum attenuation coefficients per kilometer of optical fiber in this range exceeds 0.04 dB/km. Even when narrowed to the C+L band, there is still a difference of more than 0.03 dB/km. Due to this large difference, after transmission over distances of 80 km or even 100 km, the line will have a signal strength difference of more than 3dB in this band range, which makes it difficult to compensate for the gain of the line. In practical applications, it is difficult to expand the band range of the optical fiber communication system from the C band to other nearby bands to meet the requirements of WDM applications.

### Summary of the Invention

The embodiment of the present application provides a multiband attenuation flattened optical fiber so as to solve the problem of large multiband attenuation flatness in the related art.

The embodiment provides a multiband attenuation flattened optical fiber, comprising a central gradient core layer, a flattened core layer, a transition core layer, a flattened suppression cladding layer, and a quartz cladding layer which are arranged successively from inside to outside in a radial direction;

a refractive index of the central gradient core layer is less than that of the flattened core layer, the refractive index of the flattened core layer is greater than that of the transition core layer, and the refractive index of the transition core layer is greater than that of the flattened suppression cladding layer;

from inside to outside in the radial direction, a relative refractive index difference of the central gradient core layer is increased in a first polynomial line shape, and the relative refractive index difference of the transition core layer is decreased in a second polynomial line shape; and

the central gradient core layer, the flattened core layer and the flattened suppression cladding layer are all doped with germanium, or the central gradient core layer and the flattened suppression cladding layer are all doped with fluorine.

In some embodiments, the refractive index of the flattened core layer is $n_2$, the refractive index of the quartz cladding layer is $n_5$, and the relative refractive index difference between $n_2$ and $n_5$ is $\Delta n_2$; and a value range of $\Delta n_2$ is 0.0~0.03 and 0.11~0.25.

In some embodiments, the refractive index of the flattened suppression cladding layer is $n_4$, and the relative refractive index difference between $n_4$ and $n_5$ is $\Delta n_4$;

$$\Delta n_4 = \Delta n_2 - a_4,$$

wherein

when the value range of $\Delta n_2$ is 0.0~0.03, the value range of $a_4$ is 0.11~0.41; and when the value range of $\Delta n_2$ is 0.11~0.25, the value range of $a_4$ is 0.0~0.13.

In some embodiments, the refractive index of the central gradient core layer is $n_1$, and the relative refractive index difference between $n_1$ and $n_5$ is $\Delta n_1$;

when the value range of $\Delta n_2$ is 0.0~0.03, $\Delta n_1 = [a_1 * (x_1 + x_1^2) + b_1]/100$, wherein $x_1$ is a distance from any point in the central gradient core layer to a central origin point of the central gradient core layer, the value range of $a_1$ is 1.8% ~2.4%, and the value range of $b_1$ is 0.18%~0.24%; and

when the value range of $\Delta n_2$ is 0.11~0.25, $\Delta n_1 = [a_1 * (x_1 + x_1^2 + x_1^3 - 1) + b_1]/100$, wherein $x_1$ is the distance from any point in the central gradient core layer to the central origin point of the central gradient core layer, the value range of $a_1$ is 1.0%~2.0%, and the value range of $b_1$ is 0.10~0.24.

In some embodiments, the refractive index of the transition core layer is $n_3$, and the relative refractive index difference between $n_3$ and $n_5$ is $\Delta n_3$;

$$\Delta n_3 = [b_3 * (1 - a_3 * x_3^2)]/100,$$

wherein

$x_3$ is a distance from any point in the transition core layer to the flattened core layer; when the value range of $\Delta n_2$ is 0.0~0.03, the value range of $a_3$ is 10~30, and the value range of $b_3$ is 0.08~0.12; and when the value range of $\Delta n_2$ is 0.11~0.25, the value range of $a_3$ is 0.9~1.0, and the value range of $b_3$ is 0.11~0.25.

In some embodiments, when the central gradient core layer, the flattened core layer and the flattened suppression cladding layer are all doped with germanium, the flattened suppression cladding layer is doped with an alkali metal element or a halogen to reduce the viscosity.

In some embodiments, when the central gradient core layer and the flattened suppression cladding layer are both doped with fluorine, the central gradient core layer and the flattened core layer are doped with an alkali metal element or a halogen to reduce the viscosity.

In some embodiments, the alkali metal element is at least one of potassium and lithium, and the halogen is chlorine.

In some embodiments, a dynamic friction coefficient of the multiband attenuation flattened optical fiber is 0.1~0.5.

In some embodiments, when the central gradient core layer, the flattened core layer and the flattened suppression cladding layer are all doped with germanium, a cut-off wavelength of the multi-band attenuation flattened optical fiber is less than 1310 nm, and when a working wavelength is 1550 nm, an attenuation value is lower than 0.190 dB/km, a multiband attenuation flatness in a C+L band is lower than 0.02 dB, and the multiband attenuation flatness in a covered portion of S and U bands between 1500 nm and 1650 nm can be lower than 0.03 dB; and

when the central gradient core layer and the flattened suppression cladding layer are both doped with fluorine, a cut-off wavelength of the multiband attenuation flattened optical fiber is 1350nm~1480nm, and when a working wavelength is 1550 nm, an attenuation value is lower than 0.170 dB/km, and the multiband attenuation flatness in the C+L band is lower than 0.01dB.

The beneficial effects brought about by the technical solution provided by the present application comprise: The optical fiber provided in the present application can achieve attenuation flatness of part of the S+C+L band and part of the U band.

The lowest attenuation of existing conventional single-mode optical fibers such as G.652.D and G.654 generally occurs near the wavelength of 1550nm~1565nm. If the wavelength is greater than this wavelength range, the attenuation of the optical fiber will increase due to the increase in macrobending loss caused by the waveguide structure and the increase in intrinsic absorption such as infrared absorption of the material itself; and if the wavelength is smaller than this wavelength range, the attenuation of the optical fiber will increase due to the intrinsic ultraviolet absorption of the optical fiber material and the effects of Rayleigh scattering.

The gain of the optical fiber amplifier to the optical fiber link is centered around 1550 nm and extends evenly on both sides. If the attenuation difference between the band ranges at both ends of 1550nm is too large relative to 1550nm itself, it cannot be uniformly amplified by the optical fiber amplifier, and the corresponding bands that cannot be uniformly amplified cannot be used in transmission.

The existing conventional single-mode optical fibers mainly adopt the C band and L band. The S band, which is close to the C band, and the U band, which is close to the L band, cannot be used in communication links due to the significant attenuation difference compared to 1550 nm. This limits the ability to expand transmission capacity through adopting more wavelengths.

The present application starts from two aspects of waveguide structure and material doping, designs a central gradient core layer and a transition core layer inside and outside the flattened core layer, and makes the relative refractive index difference between the two transition smoothly in a polynomial linear shape, which can better suppress macrobending loss in the long wavelength band.

The microbending loss of the optical fiber can be further controlled through designing a flattened suppression cladding layer outside the transition core layer.

Through doping germanium in the central gradient core layer, flattened core layer, and flattened suppression cladding layer, or doping fluorine in the central gradient core layer and the flattened suppression cladding layer, the viscosity between the core layer and cladding layer can be better matched, thereby reducing the stress between the core layer and cladding layer, which helps to control the waveguide loss of long wavelengths; and the stress reduction brought about by viscosity matching can further reduce the density fluctuation of tiny quartz materials in the core layer caused by external stress interference, thereby controlling the problem of increased short-wavelength loss caused by the influence of Rayleigh scattering.

Since germanium doping can increase the numerical aperture (NA) of the flattened suppression cladding layer, while fluorine doping can reduce the NA of the flattened suppression cladding layer, when the flattened suppression cladding layer is doped with germanium and fluorine at the same time, the viscosity of the flattened suppression cladding layer can be further reduced while maintaining the relative NA between the flattened suppression cladding layer and the quartz cladding, thereby creating conditions for increasing the concentration of germanium doping in the core layer while achieving equivalent viscosity between the core layer and the flattened suppression cladding layer.

In this case, if more germanium needs to be doped into the core layer, a certain amount of germanium and fluorine can be doped into the flattened suppression cladding layer accordingly. Doping more germanium into the core layer can, on the one hand, even out the material density fluctuations in the core area, making the attenuation of short wavelengths caused by the influence of Rayleigh scattering closer to the C band, and on the other hand, the doping of germanium can reduce the infrared absorption due to the formation of germanium dioxide, which reduces the increased attenuation of long wavelengths due to infrared absorption.

In this way, while maintaining attenuation characteristics comparable to or slightly lower than that of conventional single-mode optical fibers at 1550 nm, the difference in attenuation between the L band, part of the S band, and part of the U band compared to the C band centered at 1550nm can reach the flattened range allowed by the optical fiber amplifier, thereby realizing a communication single-mode optical fiber with flattened attenuation in the C+L band, and also achieving relatively flattened attenuation in the C+L band and part of the S band and part of the U band. This optical fiber has good compatibility with existing optical fibers.

## Brief Description of the Drawings

In order to better illustrate the technical solution in the embodiments of the present application, the following will briefly introduce the drawings needed in the description of the embodiments, and it is obvious that the drawings in the following description are part of embodiments of the present application, for those of ordinary skill in the art, other drawings may also be obtained based on these drawings without any inventive effort.

Fig. 1 is an end face diagram of a multiband attenuation flattened optical fiber in the embodiment of the present application;

Fig. 2 is a waveguide structure diagram of a multiband attenuation flattened optical fiber in the embodiment of the present application.

In the figures: 1-central gradient core layer; 2-flattened core layer; 3-transition core layer; 4-flattened suppression cladding layer; 5-quartz cladding layer; 6-inner coating layer; 7-outer coating layer.

## Detailed Description of the Embodiments

In order to make the purpose, technical solutions and advantages of the embodiments of the present application clearer, the technical solutions in the embodiments of the present application will be described clearly and completely in combination with the drawings in the embodiments of the present application. Obviously, the described embodiments are only a part of the embodiments of the present application, not all of the embodiments. Based on the embodiments in the present application, all other embodiments obtained by a person of ordinary skill in the art without inventive efforts shall fall within the protection scope of the present application.

The attenuation of silica-based optical fiber can be expressed as:

$$\alpha_{tot}=\alpha_{UV}+\alpha_{IR}+\alpha_{abs}+\alpha_{scattering}+\alpha_{waveguide}$$

$\alpha_{tot}$ is the total attenuation of the optical fiber, $\alpha_{UV}$ is the absorption loss caused by electronic transition, $\alpha_{IR}$ is the loss caused by multi-phonon absorption, $\alpha_{abs}$ is the loss caused by impurity and defect absorption, $\alpha_{scattering}$ is the loss caused by scattering, and $\alpha_{waveguide}$ is the waveguide loss; and for communication optical fibers, impurities, defects, scattering and waveguide losses are the main causes of optical fiber attenuation.

When the attenuation has been reduced to a certain level and the focus shifts to minimizing the attenuation difference among the S, C, L and even U bands, impurities and defects are no longer the main reasons for solving the multiband attenuation flatness. The main problem at this time is how to deal with the impact of scattering and waveguide loss on the attenuation flatness across multiple bands.

For quartz optical fibers, due to ultraviolet absorption and infrared absorption, the attenuation is lowest around the C band, which is considered the minimum attenuation band. In the S band, the attenuation increases due to factors such as infrared absorption. In the L and U bands, the attenuation becomes higher due to the impact of infrared absorption. Therefore, in terms of scattering loss, it is necessary to consider how to optimize the resulting ultraviolet and infrared absorption losses, thereby reducing the resulting attenuation differences across multiple bands.

In addition, due to the influence of waveguide loss, as the working wavelength moves away from the cut-off wavelength, the waveguide loss thereof will gradually increase, which will be more obvious in the L and U bands. Therefore, to reduce the attenuation difference between the L band or even U band and the C band, it is necessary to consider optimizing the waveguide loss in order to lower the attenuation in the L and U bands.

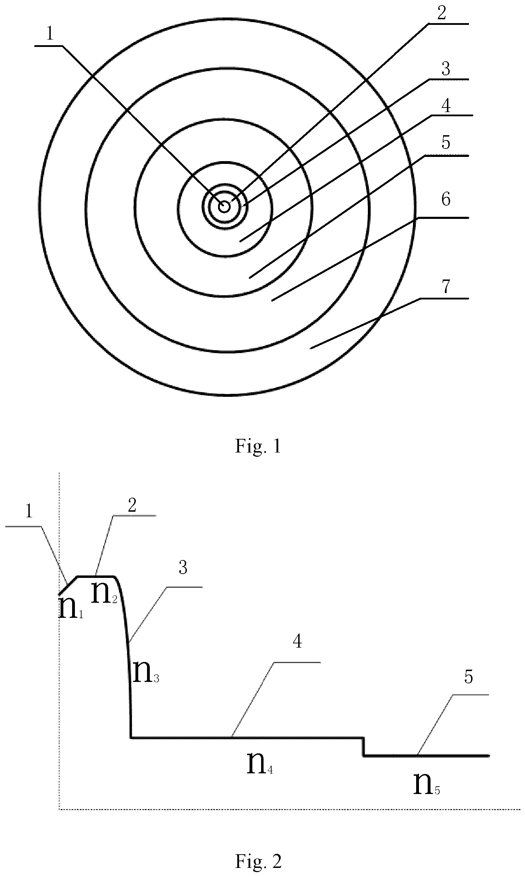

In order to reduce the attenuation difference across multiple bands, as shown in Fig. 1 and Fig. 2, the embodiment of the present application provides a multiband attenuation flattened optical fiber, which comprises a central gradient core layer 1, a flattened core layer 2, a transition core layer 3, a flattened suppression cladding layer 4, and a quartz cladding layer 5 which are arranged successively from inside to outside in a radial direction; a refractive index of the central gradient core layer 1 is less than that of the flattened core layer 2, the refractive index of the flattened core layer 2 is greater than that of the transition core layer 3, and the refractive index of the transition core layer 3 is greater than that of the flattened suppression cladding layer 4; from inside to outside in the radial direction, a relative refractive index difference of the central gradient core layer 1 is increased in a first polynomial line shape, and the relative refractive index difference of the transition core layer 3 is decreased in a second polynomial line shape; and the central gradient core layer 1, the flattened core layer 2 and the flattened suppression cladding layer 4 are all doped with germanium, or the central gradient core layer 1 and the flattened suppression cladding layer 4 are all doped with fluorine.

The present application starts from the two aspects of waveguide structure and material doping, designs a central gradient core layer 1 and a transition core layer 3 inside and outside the flattened core layer 2, and makes the relative refractive index difference between the two to transition smoothly in a polynomial line shape, and designs a flattened suppression cladding layer 4 outside the transition core layer 3, and makes the central gradient core layer 1, the flattened core layer 2 and the flattened suppression cladding layer 4 doped with germanium, or makes the central gradient core layer 1 and the flattened suppression cladding layer 4 doped with fluorine, so as to realize a communication single-mode optical fiber with flattened attenuation in the C+L band, and also realizes relatively flattened attenuation in the C+L band and part of the S band and part of the U band. The optical fiber has good compatibility with existing optical fibers, can simultaneously meet the requirements of G.652.D, and even after optimization, can meet the application requirements of the G.657.A series optical fibers.

As shown in Fig. 2, when the cut-off wavelength is controlled below 1310 nm, more germanium is doped into the central gradient core layer 1, the flattened core layer 2 and the flattened suppression cladding layer 4, and more germanium is doped into the central gradient core layer 1 and the flattened core layer 2 to further raise the refractive index of the central gradient core layer 1 and the flattened core layer 2, and make the relative refractive index difference of the central gradient core layer 1 present a first polynomial line shape, and the relative refractive index difference of the transition core layer 3 present a second polynomial line shape, so as to smooth the uniform doping of the internal components; and at the same time, a certain amount of alkali metal elements such as potassium and lithium or halogens such as chlorine are doped into the flattened suppression cladding layer 4 to reduce the suppression viscosity.

The cut-off wavelength of the multiband attenuation flattened optical fiber is desired to be controlled to be less than 1310 nm, when the working wavelength is 1550 nm, the attenuation value is lower than 0.190 dB/km, the multiband attenuation flatness in the C+L band is lower than 0.02 dB, and the typical value can reach 0.010~0.015dB; the multiband attenuation flatness covering part of the S and U bands from 1500nm to 1650nm can be less than 0.03dB; and the mode field diameter range corresponding to the central gradient core layer 1 and the flattened core layer 2 as a whole is 8.5~11.0 micrometers, while the matching ratio of the flattened suppression cladding layer 4 is in the range of 45.0~125.0 micrometers.

When the cut-off wavelength of the multiband attenuation flattened optical fiber is desired to be controlled within the range of 1350nm~1480nm, the flattened suppression cladding layer 4 is doped with fluorine, the central gradient core layer 1 and the flattened core layer 2 are pure quartz cores, and a certain amount of alkali metal elements such as potassium and lithium or halogens such as chlorine are doped into the central gradient core layer 1 and the flattened core layer 2 to reduce the suppression viscosity. At the same time, in terms of the refractive index curve design, a trace amount of fluorine is gradually doped into the central gradient core layer 1 so that the relative refractive index difference thereof presents a first polynomial line shape, and a certain amount of fluorine is gradually doped into the transition core layer 3 so that the relative refractive index difference thereof presents a second polynomial line shape, thereby smoothing the uniform doping of the internal components.

The cut-off wavelength of the multiband attenuation flattened optical fiber is 1350nm~1480nm, when the working wavelength is 1550nm, the attenuation value is lower than 0.170dB/km, with a typical value of better than 0.160dB/km, and the multiband attenuation flatness in the C+L band is lower than 0.01dB, with a typical value of better than 0.008 dB; and the mode field diameter range corresponding to the central gradient core layer 1 and the flattened core layer 2 as a whole is 9.0~12.0 micrometers, while the matching ratio of the flattened suppression cladding layer 4 is in the range of 45.0~125.0 micrometers.

It should be noted that, in order to obtain the desired waveguide structure, when the central gradient core layer 1, the flattened core layer 2 and the flattened suppression cladding layer 4 are all doped with germanium, fluorine can also be doped in the flattened suppression cladding layer 4 according to actual needs; and when the central gradient core layer 1 and the flattened suppression cladding layer 4 are both doped with fluorine, germanium can also be doped into the central gradient core layer 1 and the flattened core layer 2 according to actual needs.

The present application adopts the following formula to calculate the relative refractive index difference $\Delta n_i$:

$$\Delta n_i = (n_i - n_5)/(n_i + n_5) * 100\%,$$

wherein

$n_5$ is the refractive index of the quartz cladding layer 5, for the present application, when the relative refractive index difference $\Delta n_1$ between the central gradient core layer 1 and the quartz cladding layer 5 is calculated, $n_i$ in the formula is the refractive index $n_1$ of the central gradient core layer 1; when the relative refractive index difference $\Delta n_2$ between the flattened core layer 2 and the quartz cladding layer 5 is calculated, $n_i$ in the formula is the refractive index $n_2$ of the flattened core layer 2; and the same applies to other layers.

In the present application, the relative refractive index difference $\Delta n_2$ of the flattened core layer 2 has a value range of 0.0~0.03 and 0.11~0.25.

The refractive index of the flattened suppression cladding layer 4 is $n_4$, and the relative refractive index difference between $n_4$ and $n_5$ is $\Delta n_4$; the relative refractive index difference of the flattened suppression cladding layer 4 is $\Delta n_4$, which is achieved through the following formula:

$$\Delta n_4 = \Delta n_2 - a_4,$$

, wherein

when the value range of $\Delta n_2$ is 0.0~0.03, the value range of $a_4$ is 0.11~0.41; and when the value range of $\Delta n_2$ is 0.11~0.25, the value range of $a_4$ is 0.0~0.13.

That is, the relative refractive index difference $\Delta n_4$ of the flattened suppression cladding layer 4 is adjusted based on the relative refractive index difference $\Delta n_2$ of the flattened core layer 2 as a reference.

The refractive index of the central gradient core layer 1 is $n_1$, and the relative refractive index difference between $n_1$ and $n_5$ is $\Delta n_1$; and the relative refractive index difference of the central gradient core layer 1 is $\Delta n_1$, which is achieved through the following formula:

when the value range of $\Delta n_2$ is 0.0~0.03, the relative refractive index difference of the central gradient core layer 1 is $\Delta n_1 = [a_1*(x_1 + x_1^2) + b_1]/100$, wherein $x_1$ is a distance from any point in the central gradient core layer 1 to a central origin point of the central gradient core layer 1, the value range of $a_1$ is 1.8%~2.4%, and the value range of $b_1$ is 0.18%~0.24%.

When the value range of $\Delta n_2$ is 0.11~0.25, the relative refractive index difference of the central gradient core layer 1 is $\Delta n_1 = [a_1*(x_1 + x_1^2 + x_1^3 - 1) + b_1]/100$, wherein $x_1$ is the distance from any point in the central gradient core layer 1 to the central origin point of the central gradient core layer 1, the value range of $a_1$ is 1.0%~2.0%, and the value range of $b_1$ is 0.10~0.24.

The refractive index of the transition core layer 3 is $n_3$, and the relative refractive index difference between $n_3$ and $n_5$ is $\Delta n_3$; the relative refractive index difference of the transition core layer 3 is $\Delta n_3$, which is achieved through the following

formula:

$$\Delta n_3 = [b_3 * (1 - a_3 * x_3^2)] / 100,$$

wherein

$x_3$ is a distance from any point in the transition core layer 3 to the flattened core layer 2; when the value range of $\Delta n_2$ is 0.0~0.03, the value range of $a_3$ is 10~30, and the value range of $b_3$ is 0.08~0.12; and when the value range of $\Delta n_2$ is 0.11~0.25, the value range of $a_3$ is 0.9~1.0, and the value range of $b_3$ is 0.11~0.25.

As shown in Fig. 1, an inner coating layer 6 and an outer coating layer 7 are successively provided on the outer side of the quartz cladding layer 5.

The Young's modulus of the inner coating layer 6 is in the range of 0.2 Mpa~10 Mpa, and the Young's modulus of the outer coating layer 7 is controlled in the range of 0.3 Gpa~1.0 Gpa.

The diameter of the quartz cladding layer 5 can be either 80.0 micrometers or 125.0 micrometers.

When the diameter of the quartz cladding layer 5 is 80.0 micrometers, the diameter of the outer coating layer 7 can range from 160.0 micrometers to 180.0 micrometers, with a typical value between 165.0 micrometers and 175.0 micrometers.

When the diameter of the quartz cladding layer 5 is 125.0 micrometers, the diameter of the outer coating layer 7 can range from 180.0 micrometers to 250.0 micrometers, with a typical value between 200.0 micrometers and 245.0 micrometers.

The multiband attenuation flattened optical fiber in the present application has a dynamic friction coefficient value of 0.1~ 0.5.

The dynamic friction coefficient between the optical fiber and the sleeve is measured using the method outlined in Appendix D of GB/T 24456-2009 High-Density Polyethylene Silicon Core Tube, which involves the drum method for determining dynamic friction.

In the measurement apparatus, the silicon core tube is replaced with a sleeve, the optical cable and traction line are replaced with optical fibers, and the 20 kg weight is replaced with a small weight of a few hundred grams. The optical fiber is placed in different types of sleeves, such as dry sleeves or oil-filled sleeves. The number of cores can be single-core, 6-core, 12-core, 24-core, or more, the length of the sleeve is 15 meters, and the measurement is performed according to the following steps:

S101: A sleeve is taken, both ends are stripped to expose a portion of the optical fiber, and the sleeve is wound around a drum for 450° and fixed in place.

S102: Any optical fiber is selected from the sleeve, the horizontally extended end of the optical fiber is fixed on the clamp of the tensile testing machine through a fixed pulley, and the other end is suspended vertically with a weight.

S103: The tensile testing machine is operated at a pulling speed of 100 mm/min to pull the optical fiber, and through the transmission of the pulley, the optical fiber is slowly pulled out in the horizontal direction with a travel distance of 200mm.

S104: The average force value from the stable section (100 - 180 mm) of the pulling-displacement is taken as the friction force in this test.

S105: The optical fiber from the previous test is retained in the sleeve, and S102~S103 are repeated to test the next optical fiber.

According to the data measured in the above steps, the friction coefficient is measured according to the following formula:

friction coefficient formula: $\mu = \ln(F/N)/\theta$, wherein

$\mu$ is the dynamic friction coefficient; F is the average tensile force value, with the unit of N (Newtons). N is the force value generated by the weight, with the unit of N (Newtons); and $\theta$ is the angle of the sleeve wound around the drum, with a value of 7.854 radians.

The present application provides embodiments of optical fibers with different quartz cladding layer radii and corresponding parameters, and the corresponding cut-off wavelength is controlled to be less than 1310 nm. The specific parameters are shown in Table 1 below:

Table 1 Cut-off Wavelength Less Than 1310 nm

| Key Parameters | Embodi ment 1 | Embodi ment 2 | Embodi ment 3 | Embodi ment 4 | Embodi ment 5 |
|---|---|---|---|---|---|
| $a_1$ | 1.0% | 1.2% | 1.5% | 1.7% | 2.0% |
| $b_1$ | 0.1 | 0.12 | 0.15 | 0.17 | 0.24 |
| $a_3$ | 0.9 | 0.92 | 0.95 | 1.0 | 1.0 |
| $b_3$ | 0.11 | 0.15 | 0.25 | 0.18 | 0.2 |
| $\Delta n_2$ | 0.11 | 0.15 | 0.25 | 0.18 | 0.2 |
| $a_4$ | 0 | 0.04 | 0.13 | 0.06 | 0.07 |
| Mode Field Diameter ($\mu$m) of Central Gradient Core Layer and Flattened Core Layer | 8.5 | 10 | 11 | 9.5 | 9.0 |
| Diameter of Flattened Suppression Cladding Layer ($\mu$m) | 45.0 | 90.0 | 125.0 | 60.0 | 65.0 |
| Diameter of Quartz Cladding Layer ($\mu$m) | 80.0 | 80.0 | 125.0 | 80.0 | 125.0 |
| Diameter of Outer Coating Layer ($\mu$m) | 160.0 | 180.0 | 250.0 | 165.0 | 245.0 |
| Young's Modulus of Inner Coating Layer (MPa) | 0.3 | 1.2 | 10 | 1.5 | 1.2 |
| Young's Modulus of Outer Coating Layer (GPa) | 0.3 | 0.5 | 1.0 | 0.8 | 0.7 |
| Dynamic Friction Coefficient of Optical Fiber | 0.1 | 0.2 | 0.5 | 0.21 | 0.25 |

When the cut-off wavelength is less than 1310nm, the attenuation value of the optical fiber at 1550nm is better than 0.190dB/km, the attenuation flatness in the C+L band is better than 0.02dB, and the typical value can reach 0.010dB~0.015dB; the multiband attenuation flatness covering part of the S and U bands from 1500nm to 1650nm can be better than 0.03dB.

A certain amount of oxides of elements such as potassium and lithium or chlorine is doped into the flattened suppression cladding layer 4.

In the embodiment 1, the attenuation at 1550nm is 0.189dB/km, and the attenuation flatness in the C+L band is 0.02dB.

In the embodiment 2, the lithium oxide is doped into the flattened suppression cladding layer 4, and the attenuation at 1550nm is 0.176dB/km, the attenuation flatness in the C+L band is 0.018dB, and the multiband attenuation flatness covering part of the S and U bands between 1500 nm and 1650 nm is 0.03dB.

In the embodiment 3, the potassium oxide is doped into the flattened suppression cladding layer 4, and the attenuation at 1550nm is 0.165dB/km, the attenuation flatness in the C+L band is 0.012dB, and the multiband attenuation flatness covering part of the S and U bands at 1500nm~1650nm is 0.025dB.

In the embodiment 4, the chlorine is doped into the flattened suppression cladding layer 4, and the attenuation at 1550nm is 0.164dB/km, the attenuation flatness in the C+L band is 0.015dB, and the multi-band attenuation flatness covering part of the S and U bands at 1500nm~1650nm is 0.027dB.

In the embodiment 5, the attenuation at 1550nm is 0.176dB/km, and the attenuation flatness in the C+L band is 0.019dB.

The present application provides embodiments of optical fibers with different quartz cladding layer radii and corresponding parameters, and the corresponding cut-off wavelength is controlled at 1350nm~1480nm. The specific parameters are shown in Table 2 below:

Table 2 Cut-off Wavelength at 1350 nm~1480 nm

| Key Parameters | Embodi ment 6 | Embodi ment 7 | Embodi ment 8 | Embodi ment 9 | Embodim ent 10 |
|---|---|---|---|---|---|
| $a_1$ | 1.80% | 1.90% | 2.00% | 2.20% | 2.40% |
| $b_1$ | 0.18% | 0.19% | 0.20% | 0.22% | 0.24% |
| $a_3$ | 10 | 15 | 20 | 25 | 30 |
| $b_3$ | 0.08 | 0.09 | 0.1 | 0.11 | 0.12 |
| $\Delta n_2$ | 0 | 0.01 | 0.02 | 0 | 0.03 |
| $a_4$ | 0.11 | 0.15 | 0.25 | 0.4 | 0.12 |
| Mode Field Diameter ($\mu$m) of Central Gradient Core Layer and Flattened Core Layer | 12 | 11.5 | 10 | 9 | 11.5 |
| Diameter of Flattened Suppression Cladding Layer ($\mu$m) | 45 | 50 | 125 | 60 | 65 |
| Diameter of Quartz Cladding Layer ($\mu$m) | 80 | 125 | 125 | 80 | 125 |
| Diameter of Outer Coating Layer ($\mu$m) | 160 | 180 | 250 | 165 | 245 |
| Young's Modulus of Inner Coating Layer (MPa) | 0.3 | 0.5 | 10 | 2 | 1.5 |
| Young's Modulus of Outer Coating Layer (GPa) | 0.3 | 0.5 | 1 | 0.7 | 0.8 |
| Dynamic Friction Coefficient of Optical Fiber | 0.1 | 0.2 | 0.5 | 0.21 | 0.24 |

When the cut-off wavelength is within the range of 1350nm~1480nm, the attenuation value of the optical fiber at 1550nm is better than 0.170dB/km, with a typical value of better than 0.160 dB/km. The attenuation flatness in the C+L band is better than 0.01dB, with a typical value of better than 0.008 dB.

A certain amount of oxides of elements such as potassium and lithium or chlorine is doped to the central gradient core layer 1 and the flattened core layer 2 to reduce the suppression viscosity.

In the embodiment 6, the attenuation at 1550nm is 0.169dB/km, and the attenuation flatness in the C+L band is 0.01dB.

In the embodiment 7, a certain amount of lithium oxide is doped into the central gradient core layer 1 and the flattened core layer 2, and the attenuation at 1550nm is 0.164dB/km, and the attenuation flatness in the C+L band is 0.008dB.

In the embodiment 8, the chlorine is doped into the central gradient core layer 1 and the flattened core layer 2, and the attenuation at 1550nm is 0.161dB/km, and the attenuation flatness in the C+L band is 0.007dB.

In the embodiment 9, a certain amount of potassium oxide is doped into the central gradient core layer 1 and the flattened core layer 2, and the attenuation at 1550nm is 0.159dB/km, and the attenuation flatness in the C+L band is 0.007dB.

In the embodiment 10, the attenuation at 1550nm is 0.165dB/km, and the attenuation flatness in the C+L band is 0.008dB.

In the description of the present application, it should be noted that the orientation or positional relationship indicated by the terms "upper", "lower", etc. are based on the orientation or positional relationship shown in the drawings, which is only for the convenience of describing the present application and simplifying the description, instead of indicating or implying that the pointed device or element must have a specific orientation, be configured and operated in a specific orientation, therefore it may not be understood as a limitation of the present application. Unless otherwise clearly specified and limited, the terms "installation", "connected" and "connection" should be understood in a broad sense. For example, it can be a fixed connection, a detachable connection, or an integral connection; further can be a mechanical connection, or an electrical connection; further can be directly connected, or indirectly connected through an intermediate medium, or can be the internal communication between two components. For those of ordinary skill in the art, the specific meanings of the above-mentioned terms in the present application may be understood according to specific circumstances.

It should be noted that relational terms such as "first" and "second" are only for distinguishing one entity or operation from another entity or operation in the present application, and do not necessarily require or imply any such actual relationship or order between these entities or operations. Moreover, the terms "include", "comprise" or any other variants thereof are intended to cover non-exclusive inclusion, so that a process, method, article or device comprising a series of elements not only comprises those elements, but also comprises those that are not explicitly listed, or further comprises elements inherent to the process, method, article, or device. If there are no more restrictions, the elements defined by the sentence "comprising a..." does not exclude the existence of other same elements in the process, method, article, or device comprising the elements.

The above-mentioned are only the embodiments of the present application, so that those skilled in the art may understand or implement the present application. For those skilled in the art, various modifications to these embodiments will be obvious, and the general principles defined herein may be implemented in other embodiments without departing from the spirit or scope of the present application. Therefore, the present application will not be limited to the embodiments shown in this document, but will be subject to the widest scope consistent with the principles and novel features applied herein.

## Claims

1. A multiband attenuation flattened optical fiber, comprising a central gradient core layer (1), a flattened core layer (2), a transition core layer (3), a flattened suppression cladding layer (4), and a quartz cladding layer (5) which are arranged successively from inside to outside in a radial direction;

    a refractive index of the central gradient core layer (1) is less than that of the flattened core layer (2), the refractive index of the flattened core layer (2) is greater than that of the transition core layer (3), and the refractive index of the transition core layer (3) is greater than that of the flattened suppression cladding layer (4);
    from inside to outside in the radial direction, a relative refractive index difference of the central gradient core layer (1) is increased in a first polynomial line shape, and the relative refractive index difference of the transition core layer (3) is decreased in a second polynomial line shape; and
    the central gradient core layer (1), the flattened core layer (2) and the flattened suppression cladding layer (4) are all doped with germanium, or the central gradient core layer (1) and the flattened suppression cladding layer (4) are all doped with fluorine.

2. The multiband attenuation flattened optical fiber according to claim 1, wherein

    the refractive index of the flattened core layer (2) is $n_2$, the refractive index of the quartz cladding layer (5) is $n_5$, and the relative refractive index difference between $n_2$ and $n_5$ is $\Delta n_2$; and
    a value range of $\Delta n_2$ is 0.0~0.03 and 0.11~0.25.

3. The multiband attenuation flattened optical fiber according to claim 2, wherein

    the refractive index of the flattened suppression cladding layer (4) is $n_4$, and the relative refractive index difference between $n_4$ and $n_5$ is $\Delta n_4$;

$$\Delta n_4 = \Delta n_2 - a_4,$$

    wherein
    when the value range of $\Delta n_2$ is 0.0~0.03, the value range of $a_4$ is 0.11~0.41; and when the value range of $\Delta n_2$ is 0.11~0.25, the value range of $a_4$ is 0.0~0.13.

4. The multiband attenuation flattened optical fiber according to claim 2, wherein

    the refractive index of the central gradient core layer (1) is $n_1$, and the relative refractive index difference between $n_1$ and $n_5$ is $\Delta n_1$;
    when the value range of $\Delta n_2$ is 0.0~0.03, $\Delta n_1 = [a_1*(x_1+x_1^2)+b_1]/100$, wherein $x_1$ is a distance from any point in the central gradient core layer (1) to a central origin point of the central gradient core layer (1), the value range of $a_1$ is 1.8%~2.4%, and the value range of $b_1$ is 0.18%~0.24%; and
    when the value range of $\Delta n_2$ is 0.11~0.25, $\Delta n_1 = [a_1*(x_1+x_1^2+x_1^3-1)+b_1]/100$, wherein $x_1$ is the distance from any point in the central gradient core layer (1) to the central origin point of the central gradient core layer (1), the value range of $a_1$ is 1.0%~2.0%, and the value range of $b_1$ is 0.10~0.24.

5. The multiband attenuation flattened optical fiber according to claim 2, wherein

the refractive index of the transition core layer (3) is $n_3$, and the relative refractive index difference between $n_3$ and $n_5$ is $\Delta n_3$;

$$\Delta n_3 = [b_3 * (1 - a_3 * x_3^2)]/100,$$

wherein
$x_3$ is a distance from any point in the transition core layer (3) to the flattened core layer (2); when the value range of $\Delta n_2$ is 0.0~0.03, the value range of $a_3$ is 10~30, and the value range of $b_3$ is 0.08~0.12; and when the value range of $\Delta n_2$ is 0.11~0.25, the value range of $a_3$ is 0.9~1.0, and the value range of $b_3$ is 0.11~0.25.

6. The multiband attenuation flattened optical fiber according to claim 1, wherein
when the central gradient core layer (1), the flattened core layer (2) and the flattened suppression cladding layer (4) are all doped with germanium, the flattened suppression cladding layer (4) is doped with an alkali metal element or a halogen to reduce the viscosity.

7. The multiband attenuation flattened optical fiber according to claim 1, wherein
when the central gradient core layer (1) and the flattened suppression cladding layer (4) are both doped with fluorine, the central gradient core layer (1) and the flattened core layer (2) are doped with an alkali metal element or a halogen to reduce the viscosity.

8. The multiband attenuation flattened optical fiber according to claim 6 or claim 7, wherein
the alkali metal element is at least one of potassium and lithium, and the halogen is chlorine.

9. The multiband attenuation flattened optical fiber according to claim 1, wherein
a dynamic friction coefficient of the multiband attenuation flattened optical fiber is 0.1~0.5.

10. The multiband attenuation flattened optical fiber according to claim 1, wherein

when the central gradient core layer (1), the flattened core layer (2) and the flattened suppression cladding layer (4) are all doped with germanium, a cut-off wavelength of the multiband attenuation flattened optical fiber is less than 1310 nm, and when a working wavelength is 1550 nm, an attenuation value is lower than 0.190 dB/km, a multiband attenuation flatness in a C+L band is lower than 0.02 dB, and the multiband attenuation flatness in a covered portion of S and U bands between 1500 nm and 1650 nm can be lower than 0.03 dB; and
when the central gradient core layer (1) and the flattened suppression cladding layer (4) are both doped with fluorine, a cut-off wavelength of the multiband attenuation flattened optical fiber is 1350nm~1480nm, and when a working wavelength is 1550 nm, an attenuation value is lower than 0.170 dB/km, and the multiband attenuation flatness in the C+L band is lower than 0.01dB.

Fig. 1

Fig. 2

# EP 4 535 050 A1

**A.   CLASSIFICATION OF SUBJECT MATTER**

G02B6/02(2006.01)i;G02B6/036(2006.01)i;G02B6/028(2006.01)i

According to International Patent Classification (IPC) or to both national classification and IPC

**B.   FIELDS SEARCHED**

Minimum documentation searched (classification system followed by classification symbols)

IPC: G02B6

Documentation searched other than minimum documentation to the extent that such documents are included in the fields searched

Electronic data base consulted during the international search (name of data base and, where practicable, search terms used)

CNABS, ENTXTC, VEN, WPABSC: 光纤, 波长, 波段, 大, 多, 带宽, 折射率, 芯, 渐变, 递减, 递增, 减小, 降低, 升高, 下降, 增大, 增高, 增加, 均匀, 宽, 平坦, 衰减, fiber?, fibre?, core?, refractive index, fall, up, minish+, decreas+, increas+, reduc+, lessen+, grad+, attenuat+

**C.   DOCUMENTS CONSIDERED TO BE RELEVANT**

| Category* | Citation of document, with indication, where appropriate, of the relevant passages | Relevant to claim No. |
|---|---|---|
| PX | CN 115047559 A (FIBERHOME TELECOMMUNICATION TECHNOLOGIES CO., LTD. et al.) 13 September 2022 (2022-09-13) claims 1-10, description, paragraphs [0004]-[0025], and figures 1-2 | 1-10 |
| X | CN 103869410 A (FIBERHOME TELECOMMUNICATION TECHNOLOGIES CO., LTD.) 18 June 2014 (2014-06-18) description, paragraphs [0024]-[0034], and figures 1-2 | 1-2, 6-9 |
| A | CN 102955197 A (SUMITOMO ELECTRIC INDUSTRIES, LTD.) 06 March 2013 (2013-03-06) entire document | 1-10 |
| A | CN 103472525 A (FIBERHOME TELECOMMUNICATION TECHNOLOGIES CO., LTD. et al.) 25 December 2013 (2013-12-25) entire document | 1-10 |
| A | CN 103955020 A (ZHONGTIAN TECHNOLOGY PRECISION MATERIALS CO., LTD.) 30 July 2014 (2014-07-30) entire document | 1-10 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 February 2023** | **20 February 2023** |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/127618**

**C.    DOCUMENTS CONSIDERED TO BE RELEVANT**

| Category* | Citation of document, with indication, where appropriate, of the relevant passages | Relevant to claim No. |
|---|---|---|
| A | CN 104459876 A (YANGTZE OPTICAL FIBRE AND CABLE JOINT STOCK LIMITED COMPANY) 25 March 2015 (2015-03-25)<br>entire document | 1-10 |
| A | CN 114153021 A (SHANDONG FUTONG LIGHT GUIDE TECHNOLOGY CO., LTD.) 08 March 2022 (2022-03-08)<br>entire document | 1-10 |
| A | JP 2004133273 A (HITACHI CABLE LTD.) 30 April 2004 (2004-04-30)<br>entire document | 1-10 |

Form PCT/ISA/210 (second sheet) (July 2022)

# EP 4 535 050 A1

| INTERNATIONAL SEARCH REPORT | | International application No. | |
|---|---|---|---|
| Information on patent family members | | PCT/CN2022/127618 | |

| Patent document cited in search report | | | Publication date (day/month/year) | Patent family member(s) | | | Publication date (day/month/year) |
|---|---|---|---|---|---|---|---|
| CN | 115047559 | A | 13 September 2022 | None | | | |
| CN | 103869410 | A | 18 June 2014 | ES | 2718879 | T3 | 05 July 2019 |
| | | | | EP | 3098631 | A1 | 30 November 2016 |
| | | | | EP | 3098631 | A4 | 30 August 2017 |
| | | | | EP | 3098631 | B1 | 06 March 2019 |
| | | | | CA | 2928115 | A1 | 30 July 2015 |
| | | | | CA | 2928115 | C | 16 January 2018 |
| | | | | KR | 20160113601 | A | 30 September 2016 |
| | | | | KR | 101835249 | B1 | 06 March 2018 |
| | | | | WO | 2015109861 | A1 | 30 July 2015 |
| | | | | CN | 103869410 | B | 30 December 2015 |
| | | | | IN | 201647019133 | A | 31 August 2016 |
| CN | 102955197 | A | 06 March 2013 | EP | 2562571 | A2 | 27 February 2013 |
| | | | | EP | 2562571 | A3 | 27 May 2015 |
| | | | | EP | 2562571 | B1 | 28 December 2016 |
| | | | | JP | 2013061620 | A | 04 April 2013 |
| | | | | JP | 6035780 | B2 | 30 November 2016 |
| | | | | JP | 2017062486 | A | 30 March 2017 |
| | | | | JP | 6269782 | B2 | 31 January 2018 |
| | | | | US | 2013077925 | A1 | 28 March 2013 |
| | | | | US | 8731357 | B2 | 20 May 2014 |
| | | | | CN | 102955197 | B | 24 August 2016 |
| CN | 103472525 | A | 25 December 2013 | CN | 103472525 | B | 13 May 2015 |
| CN | 103955020 | A | 30 July 2014 | CN | 103955020 | B | 18 January 2017 |
| CN | 104459876 | A | 25 March 2015 | CN | 104459876 | B | 12 April 2017 |
| CN | 114153021 | A | 08 March 2022 | None | | | |
| JP | 2004133273 | A | 30 April 2004 | JP | 3979259 | B2 | 19 September 2007 |

Form PCT/ISA/210 (patent family annex) (July 2022)